# EUROPEAN PATENT APPLICATION

(11) **EP 2 579 520 A1**
(43) Date of publication of application: **10.04.2013**
(21) Application number: 11789186.1
(22) Date of filing: 30.05.2011
(51) Int. Cl.: H04L 12/56

(54) **BANDWIDTH ALLOCATION METHOD AND DEVICE FOR REALIZING BANDWIDTH ALLOCATION**

(30) Priority: 12.11.2010 CN 201010550585
(71) Applicant: Huawei Technologies Co., Ltd., Shenzhen, Guangdong 518129 (CN)
(72) Inventor: HU, Xing, Shenzhen Guangdong 518129 (CN); ZHOU, Jianlin, Shenzhen Guangdong 518129 (CN); CAO, Yang, Shenzhen Guangdong 518129 (CN)
(74) Representative: Pfenning, Meinig & Partner GbR
(86) International application number: PCT/CN2011/074910
(87) International publication number: WO 2011/150807

(57) **Abstract**

Embodiments of the present invention relate to a bandwidth allocation method and a device for implementing bandwidth allocation, where the method includes: sending, by a distributing module, an obtained source address, an obtained destination address, and obtained bandwidth request information of a TC frame in each data frame to a DBA subsystem corresponding to the source address; if it is determined, by the DBA subsystem corresponding to the source address, that the DBA subsystem corresponding to the source address is different from a DBA subsystem corresponding to the destination address, reporting the source address, the destination address, and the bandwidth request information to a cross-domain allocating module, so that the cross-domain allocating module sends the source address, the destination address, and the bandwidth request information to the DBA subsystem corresponding to the destination address; and performing, by the DBA subsystem corresponding to the destination address, bandwidth allocation processing on the TC frame according to the received bandwidth request information, to obtain bandwidth allocation information, and forwarding the bandwidth allocation information to the DBA subsystem corresponding to the source address through the cross-domain allocating module, so that the DBA subsystem corresponding to the source address calculates and delivers bandwidth allocation information corresponding to the TC frame in the data frame.

## Description

This application claims priority to Chinese Patent Application No. 201010550585.6, filed with the Chinese Patent Office on November 12, 2010, and entitled "BANDWIDTH ALLOCATION METHOD AND DEVICE FOR IMPLEMENTING BANDWIDTH ALLOCATION", which is hereby incorporated by reference in its entirety.

### FIELD OF THE INVENTION

Embodiments of the present invention relate to the field of communications technologies, and in particular to a bandwidth allocation method and a device for implementing bandwidth allocation.

### BACKGROUND OF THE INVENTION

An optical transport network (Optical Transport Network, OTN for short) technology is a core technology of a new-generation transport network, includes technical specifications of an electrical layer and an optical layer, is capable of implementing flexible scheduling and management of large-capacity services, and gradually becomes a mainstream technology of a backbone transport network.

As a traditional transmission technology, an existing OTN system is capable of providing large-pipeline transport, perfect operation, administration, and maintenance (Operation Administration and Maintenance, OAM for short), and protection mechanisms. Because it is still a rigid pipeline, bandwidth efficiency is low for small-granularity services and burst services, and a quality of service (Quality of Service, QoS for short) capability is insufficient, and a comprehensive cost of capacity expansion is high. In order to bear small-granularity services in the OTN, in the prior art, a generic framing procedure (Generic Framing Procedure, GFP for short) manner defined in G.709 is adopted for transport. A working process specifically is that: Service data of a client signal is encapsulated by adopting GFP; a GFP frame is adapted to an optical channel payload unit k (Optical Channel Payload Unit-k, OPUk for short), and an excessive OPUk bandwidth is filled with an idle GFP frame; the OPUk is transported through an optical channel data unit k (Optical Channel Data Unit-k, ODUk for short) and an optical channel transmission unit k (Optical Channel Transmission Unit-k, OTUk for short) to a destination end; after receiving the OPUk, the destination end is capable of obtaining the client signal from GFP frames after decapsulation by adopting an operation opposite to the foregoing process.

During the process of implementing the present invention, the inventor finds that: During the foregoing transport process, the entire OPUk is used as a channel for bearing a client signal. At present, the smallest granularity defined in the OTN is OPU0, which is about 1.25 Gbit/Sec. When a bandwidth of service data of a client signal is smaller than the OPU0 bandwidth, an idle (idle) frame of GFP is used for filling. Therefore, an OPUk bandwidth utilization rate is low when small-bandwidth services are borne.

### SUMMARY OF THE INVENTION

Embodiments of the present invention aim at providing a bandwidth allocation method and a device for implementing bandwidth allocation, and improving a bandwidth utilization rate of service data during a transmission process.

An embodiment of the present invention provides a bandwidth allocation method, including:
sending, by a distributing module, an obtained source address, an obtained destination address, and obtained bandwidth request information of a transmission container frame in each data frame to a dynamic bandwidth allocation subsystem corresponding to the source address;
if it is determined, by the dynamic bandwidth allocation subsystem corresponding to the source address, that the dynamic bandwidth allocation subsystem corresponding to the source address is different from a dynamic bandwidth allocation subsystem corresponding to the destination address, reporting the source address, the destination address, and the bandwidth request information to a cross-domain allocating module, so that the cross-domain allocating module sends the source address, the destination address, and the bandwidth request information to the dynamic bandwidth allocation subsystem corresponding to the destination address; and
performing, by the dynamic bandwidth allocation subsystem corresponding to the destination address, bandwidth allocation processing on the transmission container frame according to the received bandwidth request information, to obtain bandwidth allocation information, and forwarding the bandwidth allocation information to the dynamic bandwidth allocation subsystem corresponding to the source address through the cross-domain allocating module, so that the dynamic bandwidth allocation subsystem corresponding to the source address calculates and delivers bandwidth allocation information corresponding to the transmission container frame in the data frame.

An embodiment of the present invention provides a device for implementing bandwidth allocation, where the device includes: a distributing module, multiple dynamic bandwidth allocation subsystems, and a cross-domain allocating module; where,
the distributing module is configured to send an obtained source address, an obtained destination address, and obtained bandwidth request information of a transmission container frame in each data frame to a dynamic bandwidth allocation subsystem corresponding to the source address;
the dynamic bandwidth allocation subsystem corresponding to the source address is configured to: if it is determined that the dynamic bandwidth allocation subsystem corresponding to the source address is different from a dynamic bandwidth allocation subsystem corresponding to the destination address, report the source address, the destination address, and the bandwidth request information to the cross-domain allocating module, so that the cross-domain allocating module sends the source address, the destination address, and the bandwidth request information to the dynamic bandwidth allocation subsystem corresponding to the destination address; and
the dynamic bandwidth allocation subsystem corresponding to the destination address performs bandwidth allocation processing on the transmission container frame according to the received bandwidth request information, to obtain bandwidth allocation information, and forwards the bandwidth allocation information to the dynamic bandwidth allocation subsystem corresponding to the source address through the cross-domain allocating module, so that the dynamic bandwidth allocation subsystem corresponding to the source address calculates and delivers bandwidth allocation information corresponding to the transmission container frame in the data frame.

In the bandwidth allocation method and the device for implementing bandwidth allocation provided in the embodiments of the present invention, the distributing module sends the obtained source address, the obtained destination address, and the obtained bandwidth request information of the transmission container frame in each data frame to the dynamic bandwidth allocation subsystem corresponding to the source address, if it is determined, by the dynamic bandwidth allocation subsystem corresponding to the source address, that the dynamic bandwidth allocation subsystem corresponding to the source address is different from the dynamic bandwidth allocation subsystem corresponding to the destination address, the source address, the destination address, and the bandwidth request information are reported to the cross-domain allocating module, so that the cross-domain allocating module sends the source address, the destination address, and the bandwidth request information to the dynamic bandwidth allocation subsystem corresponding to the destination address, and the dynamic bandwidth allocation subsystem corresponding to the destination address performs the bandwidth allocation processing on the transmission container frame according to the received bandwidth request information, to obtain the bandwidth allocation information, and sends the bandwidth allocation information to the dynamic bandwidth allocation subsystem corresponding to the source address through the cross-domain allocating module, so that the dynamic bandwidth allocation subsystem corresponding to the source address calculates and delivers bandwidth allocation information of the data frame, thereby effectively improving the bandwidth utilization rate of the service data during the transmission process.

### BRIEF DESCRIPTION OF THE DRAWINGS

To illustrate technical solutions in the embodiments of the present invention or in the prior art more clearly, accompanying drawings that need to be used for describing the embodiments or the prior art are briefly introduced in the following. Obviously, the accompanying drawings in the following description are merely some embodiments of the present invention. Those of ordinary skill in the art may further obtain other drawings according to these accompanying drawings without making creative efforts.
FIG. 1 is a schematic architecture diagram of an OTN device applicable to an embodiment of the present invention;
FIG. 2 is a schematic flowchart of an embodiment of a bandwidth allocation method according to the present invention;
FIG. 3 is a flowchart of another embodiment of a bandwidth allocation method according to the present invention;
FIG. 4 is a schematic principle diagram of cross-connect processing in a bandwidth allocation method according to the present invention;
FIG. 5 is another schematic principle diagram of cross-connect processing in a bandwidth allocation method according to the present invention;
FIG. 6 is another schematic principle diagram of cross-connect processing in a bandwidth allocation method according to the present invention;
FIG. 7 is a schematic structural diagram of an embodiment of a device for implementing bandwidth allocation according to the present invention; and
FIG. 8 is a schematic structural diagram of another embodiment of a device for implementing bandwidth allocation according to the present invention.

### DETAILED DESCRIPTION OF THE EMBODIMENTS

The technical solutions in the embodiments of the present invention are described clearly and completely below with reference to the accompanying drawings in the embodiments of the present invention. Evidently, the embodiments to be described are merely part of rather than all of the embodiments of the present invention. All other embodiments obtained by those of ordinary skill in the art without making creative efforts based on the embodiments of the present invention shall fall within the protection scope of the present invention.

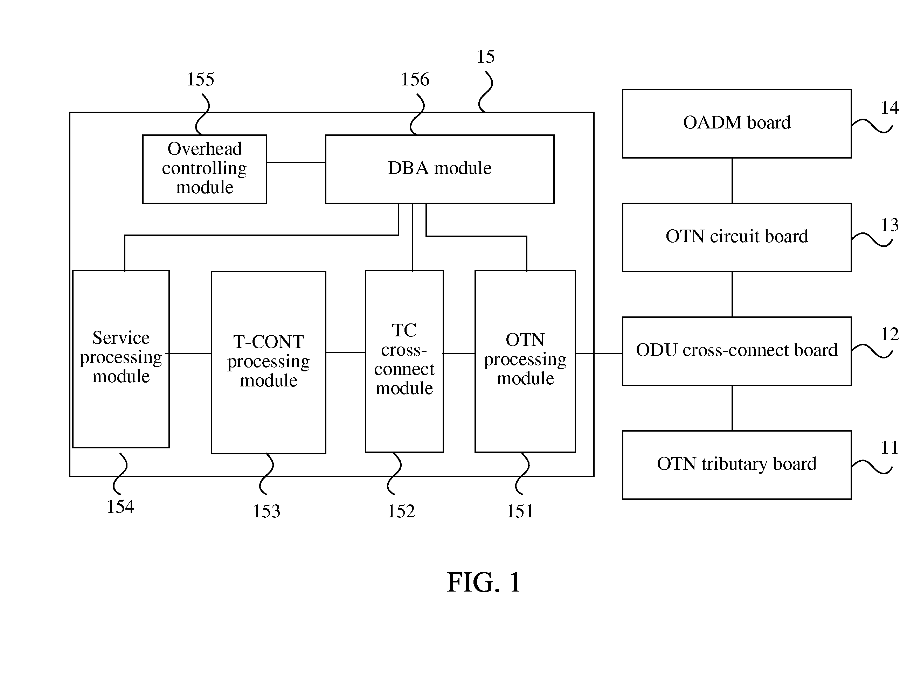

FIG. 1 is a schematic architecture diagram of an OTN device applicable to an embodiment of the present invention. As shown in FIG. 1, the OTN device includes functional boards of four types: an OTN tributary board 11, an ODU cross-connect board 12, an OTN circuit board 13, and an OADM board 14. In addition, the OTN device further includes: a multi-service transport tributary unit 15. The multi-service transport tributary unit may also be called a device for implementing bandwidth allocation.

The OTN tributary board 11 is used for functions such as access of a client service, adaptation, and de-adaptation; the ODU cross-connect board 12 is used for scheduling of ODUk frames among other different boards; the OTN circuit board 13 is used for deframing/framing of an OTUk frame, and insertion and extraction of a line overhead; the OADM board 14 is used for add (ADD) and drop (DROP) of a wavelength. The OADM board 14 may further convert a gigabit passive optical network transmission convergence layer (Gigabit-PON Transmission Convergence, GTC for short) frame into an optical signal, to achieve a function of mixed transmission of GTC frames and OUT frames in a wavelength division system; and meanwhile, when the OTN device fails, the OADM board 14 ensures normal transmission of a general transport hierarchy (General Transport Hierarchy, GTH for short) system.

Further, the multi-service transport tributary unit 15 includes: an OTN processing module 151, a transmission container (Transmission Container, TC for short) cross-connect module 152, a T-CONT processing module 153, a service processing module 154, an overhead controlling module 155, a dynamic bandwidth allocation (Dynamic Bandwidth Allocation, DBA for short) module 156; where, the OTN processing module 151 is configured to map or demap a line GTC frame or a T-CONT frame in a multi-service transport technology to an ODUk frame, frame and deframe a GTC frame, and extract or insert GTC frame overhead and bandwidth map (Bandwidth Map, BWM for short) information; the TC cross-connect module 152 is configured to implement cross-connect of upper and lower T-CONTs in a same ODUk frame, and a cross-connect function of T-CONTs between different ODUk frames; the T-CONT processing module 153 is configured to map and demap a service to a T-CONT (including extraction of bandwidth request information), and perform a check on bit interleaved parity (Bit Interleaved Parity, BIP for short) of a T-CONT channel, to complete monitoring and reporting of service bandwidth information; the service processing module 154 is configured to identify, classify, and schedule services, and implement a first-layer mapping and demapping function (for example, GEM packet and GFP packet encapsulation/decapsulation); the overhead controlling module 155 is configured to process control signals between various modules in the multi-service transport tributary unit, complete overhead processing of the OTN processing module 151 and the T-CONT processing module 153, and complete configuration of various modules; the DBA module 156 is configured to process channel associated BWM information extracted from the OTN processing module 151, send BWM information to the OTN processing module, update BWM information of the TC cross-connect module 152 (that is, update cross-connect configuration), and perform bandwidth control on the service processing module 154, thereby collecting bandwidth request information, and calculating dynamic bandwidth allocation (DBA); or reporting the bandwidth request information and receiving BWM information if software is adopted to implement a DBA calculation.

The multi-service transport tributary unit 15 may be configured to two types: a main tributary unit and a common tributary unit. A functional module included in the main tributary unit is the same as that included in the common tributary unit; if the multi-service transport tributary unit 15 is configured to the main tributary unit, the DBA module 156 needs to complete a calculation of dynamic bandwidth allocation, and deliver a result (that is, BWM information) obtained through the calculation.

In this embodiment of the present invention, the multi-service transport tributary unit 15 is configured to the main tributary unit, the DBA module 156 in the multi-service transport tributary unit 15 divides, according to types of ODUk frames, ODUk frames into multiple different DBA domains, where one ODUk frame corresponds to one DBA domain and corresponds to one DBA subsystem at the same time. In addition, the DBA module 156 includes multiple DBA subsystems, for example, DBA1, DBA2, ..., DBAn subsystems, each of which corresponds to one DBA domain.

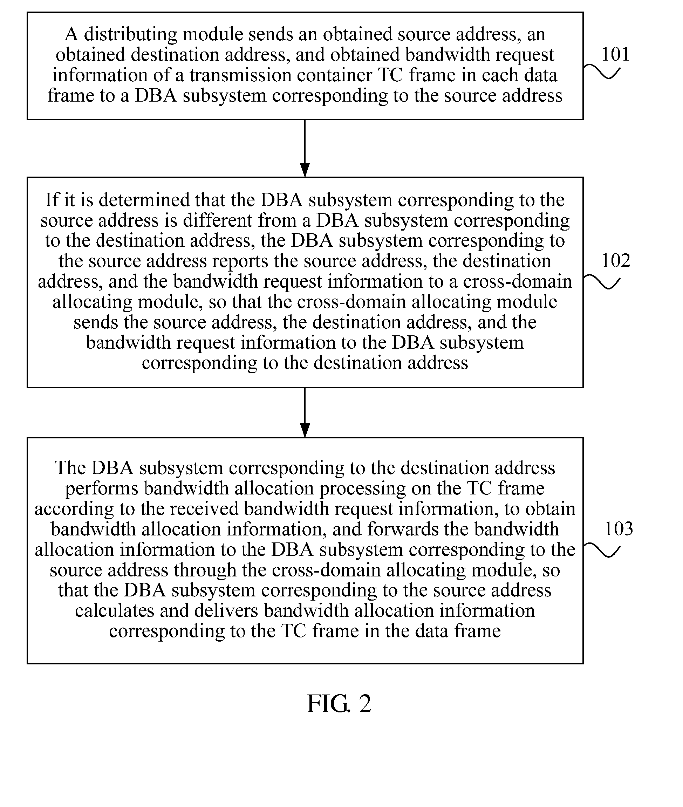

FIG. 2 is a schematic flowchart of an embodiment of a bandwidth allocation method according to the present invention. As shown in FIG. 2, the method according to this embodiment includes:
Step 101: A distributing module sends an obtained source address, an obtained destination address, and obtained bandwidth request information of a TC frame in each data frame to a DBA subsystem corresponding to the source address.
   In this embodiment, a format of a data frame may be ODUk, that is, an ODUk frame; and may also be GTC, that is, a GTC frame. A device for implementing bandwidth allocation may separately receive multiple data frames, where a data payload area in each data frame may be used to bear a TC frame. Bandwidth request information of a TC frame in each data frame may be sent to a DBA subsystem corresponding to this data frame. It needs to be noted that, there may be two types of devices for implementing bandwidth allocation. One is a main device for implementing bandwidth allocation and the other is a common device for implementing bandwidth allocation. A difference lies in that: The main device for implementing bandwidth allocation may perform a dynamic allocation calculation according to received bandwidth request information, and may deliver obtained bandwidth map information.
Step 102: If it is determined that the DBA subsystem corresponding to the source address is different from a DBA subsystem corresponding to the destination address, the DBA subsystem corresponding to the source address reports the source address, the destination address, and the bandwidth request information to a cross-domain allocating module, so that the cross-domain allocating module sends the source address, the destination address, and the bandwidth request information to the DBA subsystem corresponding to the destination address.
Step 103: The DBA subsystem corresponding to the destination address performs bandwidth allocation processing on the TC frame according to the received bandwidth request information, to obtain bandwidth allocation information, and forwards the bandwidth allocation information to the DBA subsystem corresponding to the source address through the cross-domain allocating module, so that the DBA subsystem corresponding to the source address calculates and delivers bandwidth allocation information corresponding to the TC frame in the data frame.

In this embodiment, the bandwidth allocation information includes the number of bytes allocated in a payload of a frame (for example, an OTUk frame). Assume that a payload of a frame is 100 bytes, and a frame frequency is Is. Then, a bandwidth of 80 bit/s is allocated to a TC frame, which is equivalent that 10 bytes are allocated to the TC frame in the payload of the frame.

In this embodiment, the distributing module sends the obtained source address, the obtained destination address, and the obtained bandwidth request information of the transmission container frame in each data frame to the DBA subsystem corresponding to the source address, if it is determined, by the DBA subsystem corresponding to the source address, that the DBA subsystem corresponding to the source address is different from the DBA subsystem corresponding to the destination address, the source address, the destination address, and the bandwidth request information are reported to the cross-domain allocating module, so that the cross-domain allocating module sends the source address, the destination address, and the bandwidth request information to the DBA subsystem corresponding to the destination address, and the DBA subsystem corresponding to the destination address performs the bandwidth allocation processing on the TC frame according to the received bandwidth request information, to obtain the bandwidth allocation information, and sends the bandwidth allocation information to the DBA subsystem corresponding to the source address through the cross-domain allocating module, so that the DBA subsystem corresponding to the source address calculates and delivers bandwidth allocation information of the data frame. Therefore, a bandwidth may be flexibly adjusted according to the bandwidth allocation information, thereby providing a flexible and efficient bandwidth adjustment capability while implementing bearing of a service at any rate.

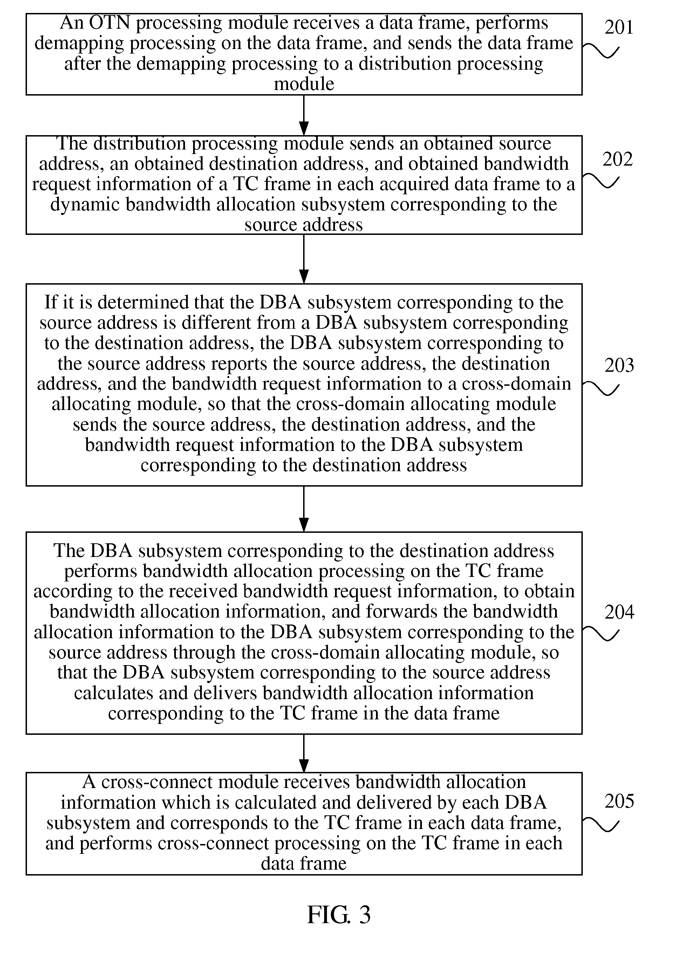

FIG. 3 is a flowchart of another embodiment of a bandwidth allocation method according to the present invention. As shown in FIG. 3, the method according to this embodiment includes:
Step 201: An OTN processing module receives a data frame, performs demapping processing on the data frame, and sends the data frame after the demapping processing to a distribution processing module.
Step 202: The distribution processing module sends an obtained source address, an obtained destination address, and obtained bandwidth request information of a TC frame in each data frame to a dynamic bandwidth allocation subsystem corresponding to the source address.
   In this embodiment, an implementation manner of step 202 is similar to an implementation manner of step 101 shown in FIG. 2, and is not repeatedly described here.
Step 203: If it is determined that the DBA subsystem corresponding to the source address is different from a DBA subsystem corresponding to the destination address, the DBA subsystem corresponding to the source address reports the source address, the destination address, and the bandwidth request information to a cross-domain allocating module, so that the cross-domain allocating module sends the source address, the destination address, and the bandwidth request information to the DBA subsystem corresponding to the destination address.
   In this embodiment, an implementation manner of step 203 is similar to an implementation manner of step 102 shown in FIG. 2, and is not repeatedly described here.
Step 204: The DBA subsystem corresponding to the destination address performs bandwidth allocation processing on the TC frame according to the received bandwidth request information, to obtain bandwidth allocation information, and forwards the bandwidth allocation information to the DBA subsystem corresponding to the source address through the cross-domain allocating module, so that the DBA subsystem corresponding to the source address calculates and delivers bandwidth allocation information corresponding to the TC frame in the data frame.
   In this embodiment, an implementation manner of step 204 is similar to an implementation manner of step 103 shown in FIG. 2, and is not repeatedly described here.
Step 205: A cross-connect module receives bandwidth allocation information which is calculated and delivered by each DBA subsystem and corresponds to the TC frame in each data frame, and performs cross-connect processing on the TC frame in each data frame.

In this embodiment, the cross-connect module receives the bandwidth allocation information calculated and delivered by each DBA subsystem, and may perform the cross-connect processing on the TC frame in each data frame, and then may flexibly adjust a bandwidth according to the bandwidth allocation information, thereby providing a flexible and efficient bandwidth adjustment capability while implementing bearing of a service at any rate. Its specific implementation manner may be performing cross-connect processing on upper and lower TCs in a same ODUk frame or GTC frame, or may be performing cross-connect processing on TCs between different ODUk frames or GTC frames. In addition, it needs to be noted that, there are cross-connect ports set on the cross-connect module on the device for implementing bandwidth allocation, where a cross-connect port with a certain specific number (for example, m) may be configured to receive a TC frame corresponding to a certain source address, while a cross-connect port with a certain specific number (for example, n) may be configured to send a certain TC frame to its corresponding destination address.

In this embodiment, specific implementation manners for performing cross-connect processing on the TC frame in each data frame in step 205 may be the following three manners:

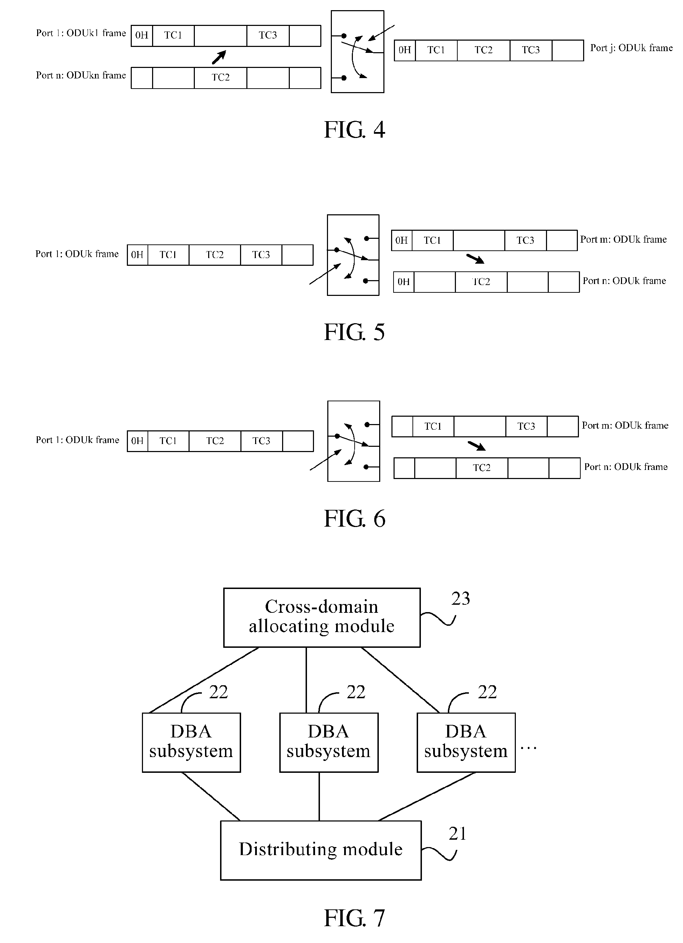

A first manner is a specific implementation manner for performing cross-connect processing on a TC frame in a same data frame. For example, FIG. 4 is a schematic principle diagram of cross-connect processing in a bandwidth allocation method according to the present invention. As shown in FIG. 1, a port 1 and a port n respectively receives an ODUk1 frame and an ODUkn frame, where the ODUk1 frame includes a TC1 frame and a TC3 frame, and the ODUkn frame includes a TC2 frame. And meanwhile, a port j may send the TC1 frame, the TC2 frame, and the TC3 frame to destination addresses corresponding to the TC1 frame, the TC2 frame, and the TC3 frame. Before cross-connect processing is performed, a DBA1 subsystem obtains, according to obtained bandwidth allocation information, a switching instruction, that is, a start position of the TC2 frame in the ODUkn frame is behind the TC1 in the ODUk1 frame, and an end position is in front of the TC3 in the ODUk1 frame. When the cross-connect processing is performed, the port j first reads data from the ODUk1 at the port 1, where the port j is a port corresponding to a destination address of the TC1 frame and the TC2 frame in the ODUk1 frame at the port 1. When reading a last byte of the TC1 frame in the ODUk1 frame at the port 1, according to the switching instruction, the port j switches to a buffer that stores the TC2 frame at the port n to read data. After reading bytes, the number of which is equivalent to a length of the TC2 frame, the port j rereads data in the TC3 frame at the port 1. In this manner, the TC2 frame is sent to the ODUk1 frame at the port j, thereby completing the cross-connect processing. It needs to be noted that, data before and after the TC2 frame in the ODUkn frame transmitted at the port n may be sent, according to a same manner, to ODUk frames received and sent by other ports.

A second manner is a specific implementation manner for cross-connect processing of TC frames between different data frames. For example, FIG. 5 is another schematic principle diagram of cross-connect processing in a bandwidth allocation method according to the present invention. As shown in FIG. 5, before cross-connect processing is performed on an ODUk frame received by a port 1, according to bandwidth allocation information obtained by a DBA subsystem corresponding to the ODUk frame at the port 1, a switching instruction is obtained, that is, a TC1 frame and a TC3 frame in the ODUk frame received by the port 1 are sent to an ODUk frame sent by a port m, and a TC2 frame in the ODUk frame received by the port 1 is sent to an ODUk frame sent by a port n.

When the cross-connect processing is performed on the ODUk frame received by the port 1, according to the switching instruction, the port m first reads data from the port 1, and stops when reading of the TC1 frame ends. Then the port n starts to read data from the port 1. After the port n finishes reading the TC2 frame, the port m starts to read data from the port 1 again. In this manner, the TC1 frame and the TC3 frame at the port 1 are crossed to the ODUk frame sent by the port m, and the TC2 frame at the port 1 is crossed to the ODUk frame sent by the port n.

A third manner is another implementation manner for cross-connect processing of TC frames between different data frames. For example, FIG. 6 is another schematic principle diagram of cross-connect processing in a bandwidth allocation method according to the present invention. As shown in FIG. 6, before cross-connect processing is performed on an ODUk frame received by a port 1, according to bandwidth allocation information obtained by a DBA subsystem corresponding to the ODUk frame at the port 1, a switching instruction is obtained. Both a port m and a port n send ODUk frames, and an ODUk frame sent by the port m is invalid data before transmitted to a start position of a TC1 frame. Then the port m starts to read data from a storage buffer of the TC1 frame at the port 1, and stops until bytes, the number of which is equivalent to a length of the TC1 frame, is read. Then it is switched that the port n reads data from the port 1. At this time, an ODUk frame sent by the port m starts to transmit invalid data again. Before an ODUk frame sent by the port n is transmitted to a TC2 frame, similarly, invalid data is output. After finishing reading data of the TC2 frame, the port n stops reading data, and starts to transmit invalid data again. Then it is switched that the port m reads data from the port 1. Finally, a TC3 frame is also crossed to the port m.

It needs to be noted that, this embodiment does not limit specific content of cross-connect processing, implementation manners for cross-connect processing are not limited to the foregoing manners, and those skilled in the art may set an implementation manner for cross-connect processing randomly according to requirements such as the environment.

In this embodiment, the distributing module sends the obtained source address, the obtained destination address, and the obtained bandwidth request information of the transmission container frame in each data frame to the DBA subsystem corresponding to the source address, if it is determined, by the DBA subsystem corresponding to the source address, that the DBA subsystem corresponding to the source address is different from the DBA subsystem corresponding to the destination address, the source address, the destination address, and the bandwidth request information are reported to the cross-domain allocating module, so that the cross-domain allocating module sends the source address, the destination address, and the bandwidth request information to the DBA subsystem corresponding to the destination address, and the DBA subsystem corresponding to the destination address performs the bandwidth allocation processing on the TC frame according to the received bandwidth request information, to obtain the bandwidth allocation information, and sends the bandwidth allocation information to the DBA subsystem corresponding to the source address through the cross-domain allocating module, so that the DBA subsystem corresponding to the source address calculates and delivers bandwidth allocation information of the data frame, and the cross-connect module performs the cross-connect processing on the TC frame in its corresponding data frame according to the received bandwidth allocation information calculated and delivered by each DBA subsystem, thereby solving problems such as low bandwidth efficiency during transmission of small-granularity services and burst services and an insufficient QoS capability in a current OTN system, effectively providing a flexible and efficient QoS capability and dynamic bandwidth adjustment capability while implementing bearing, by an OTN device, of a service at any rate, to adapt to unified transport of existing and future emerging services, and continuously lowering the capital expense (Capital Expense, CAPEX for short) and operating expense (Operating Expense, OPEX for short) for operating networks.

FIG. 7 is a schematic structural diagram of an embodiment of a device for implementing bandwidth allocation according to the present invention. As shown in FIG. 7, the device for implementing bandwidth allocation according to this embodiment includes: a distributing module 21, multiple DBA subsystems 22, and a cross-domain allocating module 23. The distributing module 21 is configured to send an obtained source address, an obtained destination address, and obtained bandwidth request information of a transmission container frame in each data frame to a DBA subsystem corresponding to the source address; the DBA subsystem 22 corresponding to the source address is configured to: if it is determined that the DBA subsystem corresponding to the source address is different from a DBA subsystem corresponding to the destination address, deliver the source address, the destination address, and the bandwidth request information to the cross-domain allocating module 23, so that the cross-domain allocating module 23 sends the source address, the destination address, and the bandwidth request information to the DBA subsystem 22 corresponding to the destination address; and the DBA subsystem 22 corresponding to the destination address is configured to perform bandwidth allocation processing on the TC frame according to the received bandwidth request information, to obtain bandwidth allocation information, and forward the bandwidth allocation information to the DBA subsystem 22 corresponding to the source address through the cross-domain allocating module, so that the DBA subsystem 22 corresponding to the source address calculates and delivers bandwidth allocation information corresponding to the TC frame in the data frame.

The device for implementing bandwidth allocation according to this embodiment may be configured to execute the technical solution according to the method embodiment shown in FIG. 2. Its implementation principle is similar, and is not repeatedly described here.

In this embodiment, the distributing module sends the obtained source address, the obtained destination address, and the obtained bandwidth request information of the transmission container frame in each data frame to the DBA subsystem corresponding to the source address, if it is determined, by the DBA subsystem corresponding to the source address, that the DBA subsystem corresponding to the source address is different from the DBA subsystem corresponding to the destination address, the source address, the destination address, and the bandwidth request information are reported to the cross-domain allocating module, so that the cross-domain allocating module sends the source address, the destination address, and the bandwidth request information to the DBA subsystem corresponding to the destination address, and the DBA subsystem corresponding to the destination address performs the bandwidth allocation processing on the TC frame according to the received bandwidth request information, to obtain the bandwidth allocation information, and sends the bandwidth allocation information to the DBA subsystem corresponding to the source address through the cross-domain allocating module, so that the DBA subsystem corresponding to the source address calculates and delivers bandwidth allocation information of the data frame. Therefore, a bandwidth may be flexibly adjusted according to the bandwidth allocation information, thereby providing a flexible and efficient bandwidth adjustment capability while implementing bearing of a service at any rate.

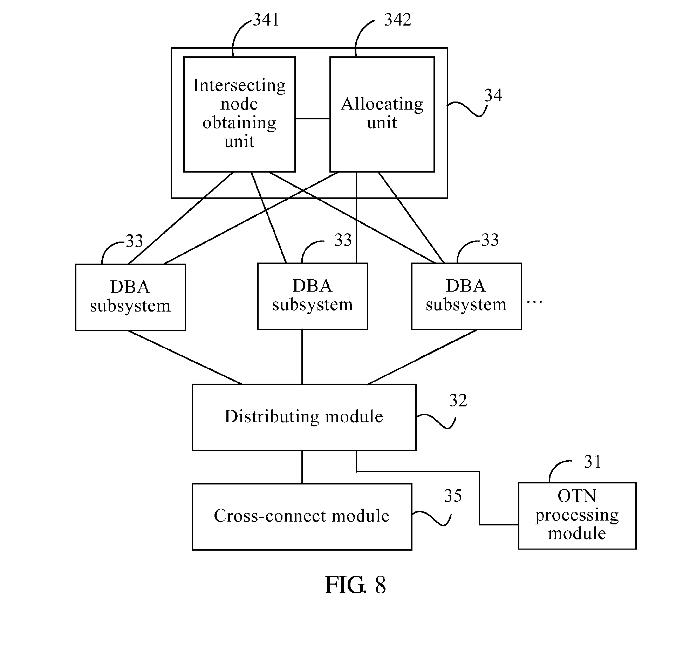

FIG. 8 is a schematic structural diagram of another embodiment of a device for implementing bandwidth allocation according to the present invention. As shown in FIG. 8, the device for implementing bandwidth allocation according to this embodiment includes: an OTN processing module 31, a distributing module 32, multiple DBA subsystems 33, a cross-domain allocating module 34, and a cross-connect module 35.

Specifically, the OTN processing module 31 receives a data frame, performs demapping processing on the data frame, and sends the data frame after the demapping processing to the distributing module 32; the distributing module 32 is configured to send an obtained source address, an obtained destination address, and obtained bandwidth request information of a TC frame in each data frame to a DBA subsystem 33 corresponding to the source address; the DBA subsystem 33 corresponding to the source address is configured to, if it is determined that the DBA subsystem corresponding to the source address is different from a DBA subsystem corresponding to the destination address, report the source address, the destination address, and the bandwidth request information to the cross-domain allocating module 34. The cross-domain allocating module 34 includes an intersecting node obtaining unit 341 and an allocating unit 342. The intersecting node obtaining unit 341 is configured to, according to the source address, destination address, and bandwidth request information of the TC frame in the received data frame reported by the DBA subsystem 33 corresponding to the source address, obtain an address of an intersecting node between the DBA subsystem 33 corresponding to the source address and the DBA subsystem 33 corresponding to the destination address, and change the source address into the address of the intersecting node; the allocating unit 342 is configured to deliver the changed source address, the destination address, and the bandwidth request information to the DBA subsystem 33 corresponding to the destination address; the DBA subsystem 33 corresponding to the destination address is configured to, according to the received bandwidth request information, perform bandwidth allocation processing on the TC frame, to obtain bandwidth allocation information, and forward the bandwidth allocation information, through the allocating unit 342 of the cross-domain allocating module 34, to a DBA subsystem 33 corresponding to the source address, so that the DBA subsystem 33 corresponding to the source address calculates and delivers bandwidth allocation information corresponding to the TC frame in the data frame; the cross-connect module 35 is configured to receive bandwidth allocation information which is calculated and delivered by each DBA subsystem and corresponds to the TC frame in the data frame, and perform cross-connect processing on the TC frame in each data frame.

It needs to be noted that, the cross-domain allocating module 34 may obtain topology information of all DBA subsystems 33 through configuration or other signaling protocols.

The device for implementing bandwidth allocation according to this embodiment may be configured to execute the technical solution according to the method embodiment shown in FIG. 3. Its implementation principle is similar, and is not repeatedly described here.

For example, a device for implementing bandwidth allocation receives one data frame. The data frame includes a TC1 frame, bandwidth request information of this TC1 frame is 100 Mbit/s, a DBA subsystem 33 corresponding to a source address of the TC1 frame is a DBA1 subsystem, and a DBA subsystem 33 corresponding to its destination address is a DBA2 subsystem. Therefore, if it is determined that the subsystem corresponding to the source address of the received TC1 frame is different from the DBA subsystem corresponding to the destination address, the DBA1 subsystem reports the source address, the destination address, and the bandwidth request information of the TC1 frame to the cross-domain allocating module 34. After receiving the source address, the destination address, and the bandwidth request information of the TC1 frame, the cross-domain allocating module 34 searches for and obtains, through the intersecting node obtaining unit 341, an address of an intersecting node between the DBA2 subsystem corresponding to the destination address of the TC1 frame and the DBA1 subsystem corresponding to the source address of the TC1 frame, changes the source address into the address of the intersecting node, and then sends the address of the intersecting node, the destination address, and the bandwidth request information to the DBA2 subsystem corresponding to the destination address through the allocating unit 342. The DBA2 subsystem, according to that an available idle bandwidth of the DBA2 subsystem is 50 Mbit/s, and bandwidth request information is 100 Mbit/s, performs bandwidth allocation processing on the TC1 frame, to obtain bandwidth allocation information. Specifically, the bandwidth allocation information is that the DBA2 subsystem allocates a 50 Mbit/s bandwidth to the TC1 frame. Then the bandwidth allocation information is sent back to the cross-domain allocating module 34. The cross-domain allocating module 34 then sends the bandwidth allocation information of the TC1 frame to the DBA1 subsystem. Finally, the cross-connect module 35 performs cross-connect processing on the received data frame according to the bandwidth allocation information obtained by the DBA1 subsystem.

In this embodiment, the distributing module sends the obtained source address, the obtained destination address, and the obtained bandwidth request information of the transmission container frame in each data frame to the DBA subsystem corresponding to the source address, if it is determined, by the DBA subsystem corresponding to the source address, that the DBA subsystem corresponding to the source address is different from the DBA subsystem corresponding to the destination address, the source address, the destination address, and the bandwidth request information are reported to the cross-domain allocating module, so that the cross-domain allocating module sends the source address, the destination address, and the bandwidth request information to the DBA subsystem corresponding to the destination address, and the DBA subsystem corresponding to the destination address performs the bandwidth allocation processing on the TC frame according to the received bandwidth request information, to obtain the bandwidth allocation information, and sends the bandwidth allocation information to the DBA subsystem corresponding to the source address through the cross-domain allocating module, so that the DBA subsystem corresponding to the source address calculates and delivers bandwidth allocation information of the data frame, and the cross-connect module performs the cross-connect processing on the TC frame in its corresponding data frame according to the received bandwidth allocation information calculated and delivered by each DBA subsystem, thereby solving problems such as low bandwidth efficiency during transmission of small-granularity services and burst services and an insufficient QoS capability in a current OTN system, effectively providing a flexible and efficient QoS capability and dynamic bandwidth adjustment capability while implementing bearing, by an OTN device, of a service at any rate, to adapt to unified transport of existing and future emerging services, and continuously lowering the CAPEX and OPEX.

Those of ordinary skill in the art may understand that all or part of the steps in the foregoing embodiments may be implemented by a program instructing related hardware. The foregoing program may be stored in a computer readable storage medium. When the program is executed, the steps in the foregoing method embodiments are executed. The foregoing storage medium may be a medium capable of storing program codes, such as a ROM, a RAM, a magnetic disk, or a compact disk.

Finally, it should be noted that, the preceding embodiments are intended to describe the technical solutions of the present invention but are not intended to limit the present invention. Although the present invention is described in detail with reference to the foregoing embodiments, those of ordinary skill in the art should understand that they may still make modifications to the technical solutions recorded in the foregoing embodiments, or equivalent replacements to part of technical features; however, there modifications or replacements do not make the essence of the corresponding technical solutions depart from the spirit and scope of the technical solutions in the embodiments of the present invention.

## Claims

1. A bandwidth allocation method, comprising:
sending, by a distributing module, an obtained source address, an obtained destination address, and obtained bandwidth request information of a transmission container frame in each data frame to a dynamic bandwidth allocation subsystem corresponding to the source address;
if it is determined, by the dynamic bandwidth allocation subsystem corresponding to the source address, that the dynamic bandwidth allocation subsystem corresponding to the source address is different from a dynamic bandwidth allocation subsystem corresponding to the destination address, reporting the source address, the destination address, and the bandwidth request information to a cross-domain allocating module, so that the cross-domain allocating module sends the source address, the destination address, and the bandwidth request information to the dynamic bandwidth allocation subsystem corresponding to the destination address; and
performing, by the dynamic bandwidth allocation subsystem corresponding to the destination address, bandwidth allocation processing on the transmission container frame according to the received bandwidth request information, to obtain bandwidth allocation information, and forwarding the bandwidth allocation information to the dynamic bandwidth allocation subsystem corresponding to the source address through the cross-domain allocating module, so that the dynamic bandwidth allocation subsystem corresponding to the source address calculates and delivers bandwidth allocation information corresponding to the transmission container frame in the data frame.

2. The bandwidth allocation method according to claim 1, further comprising:
receiving, by a cross-connect module, bandwidth allocation information which is calculated and delivered by each dynamic bandwidth allocation subsystem and corresponds to the transmission container frame in the data frame, and performing cross-connect processing on the transmission container frame in each data frame.

3. The bandwidth allocation method according to claim 2, wherein the sending, by the cross-domain allocating module, the source address, the destination address, and the bandwidth request information to the dynamic bandwidth allocation subsystem corresponding to the destination address comprises:
obtaining, by the cross-domain allocating module and according to the source address, destination address, and bandwidth request information of the transmission container frame in the received data frame reported by the dynamic bandwidth allocation subsystem, an address of an intersecting node between the dynamic bandwidth allocation subsystem corresponding to the source address and the dynamic bandwidth allocation subsystem corresponding to the destination address; and
changing, by the cross-domain allocating module, the source address into the address of the intersecting node, and delivering the changed source address, the destination address, and the bandwidth request information to the dynamic bandwidth allocation subsystem corresponding to the destination address.

4. The bandwidth allocation method according to claim 1, further comprising:
receiving, by an optical transport network processing module, the data frame, performing demapping processing on the data frame, and sending the data frame after the demapping processing to a distribution processing module.

5. A device for implementing bandwidth allocation, comprising: a distributing module, multiple dynamic bandwidth allocation subsystems, and a cross-domain allocating module; wherein,
the distributing module is configured to send an obtained source address, an obtained destination address, and obtained bandwidth request information of a transmission container frame in each data frame to a dynamic bandwidth allocation subsystem corresponding to the source address;
the dynamic bandwidth allocation subsystem corresponding to the source address is configured to: if it is determined that the dynamic bandwidth allocation subsystem corresponding to the source address is different from a dynamic bandwidth allocation subsystem corresponding to the destination address, report the source address, the destination address, and the bandwidth request information to the cross-domain allocating module, so that the cross-domain allocating module sends the source address, the destination address, and the bandwidth request information to the dynamic bandwidth allocation subsystem corresponding to the destination address; and
the dynamic bandwidth allocation subsystem corresponding to the destination address is configured to perform bandwidth allocation processing on the transmission container frame according to the received bandwidth request information, to obtain bandwidth allocation information, and forward the bandwidth allocation information to the dynamic bandwidth allocation subsystem corresponding to the source address through the cross-domain allocating module, so that the dynamic bandwidth allocation subsystem corresponding to the source address calculates and delivers bandwidth allocation information corresponding to the transmission container frame in the data frame.

6. The device for implementing bandwidth allocation according to claim 5, further comprising: a cross-connect module, configured to receive bandwidth allocation information which is calculated and delivered by each dynamic bandwidth allocation subsystem and corresponds to the transmission container frame in the data frame, and perform cross-connect processing on the transmission container frame in each data frame.

7. The device for implementing bandwidth allocation according to claim 6, wherein, the cross-domain allocating module specifically comprises:
an intersecting node obtaining unit, configured to, according to the source address, destination address, and bandwidth request information of the transmission container frame in the received data frame reported by the dynamic bandwidth allocation subsystem corresponding to the source address, obtain an address of an intersecting node between the dynamic bandwidth allocation subsystem corresponding to the source address and the dynamic bandwidth allocation subsystem corresponding to the destination address, and change the source address into the address of the intersecting node; and
an allocating unit, configured to deliver the changed source address, the destination address, and the bandwidth request information to the dynamic bandwidth allocation subsystem corresponding to the destination address.

8. The device for implementing bandwidth allocation according to claim 7, further comprising:
an optical transport network processing module, configured to receive the data frame, perform demapping processing on the data frame, and send the data frame after the demapping processing to a distribution processing module.
